# EUROPEAN PATENT SPECIFICATION

(11) **EP 4 353 214 B1**
(45) Date of publication and mention of the grant of the patent: **25.11.2026**
(21) Application number: 22201115.7
(22) Date of filing: 12.10.2022
(51) Int. Cl.: A61G 15/14, A61C 19/00

(54) **DENTAL TREATMENT UNIT WITH IMPROVED AUDIOVISUAL FACILTY FOR INSTRUMENT OPERATION & DENTAL WORKFLOW ASSISTANCE, AND PATIENT COMMUNICATION**
ZAHNBEHANDLUNGSEINHEIT MIT VERBESSERTER AUDIOVISUELLER FUNKTION FÜR INSTRUMENTENBETRIEB UND ZAHNARBEITSFLUSSUNTERSTÜTZUNG SOWIE PATIENTENKOMMUNIKATION
UNITÉ DE TRAITEMENT DENTAIRE AVEC AMÉLIORATION DE LA FACILITÉ AUDIOVISUELLE POUR LE FONCTIONNEMENT D'UN INSTRUMENT ET L'ASSISTANCE DU FLUX DE TRAVAIL DENTAIRE, ET COMMUNICATION DE PATIENT

(43) Date of publication of application: 17.04.2024
(73) Proprietor: Dentsply Sirona Inc., York, PA 17401 (US); Sirona Dental Systems GmbH, 64625 Bensheim (DE)
(72) Inventor: Sutter, Ralf, 64625 Bensheim (DE); Eberhard, Christian, 64625 Bensheim (DE); Schneider, Hans-Christian, 64625 Bensheim (DE); Rein, Matthias, 64625 Bensheim (DE)
(74) Representative: Aldridge, Henry Alexander

(56) References cited:
- GB-A- 1 073 769
- JP-B1- 7 133 733
- KR-B1- 101 015 318
- US-A1- 2022 160 461

## Description

### TECHNICAL FIELD OF THE INVENTION

The present invention relates to dental treatment units for performing dental treatments such as restorative, endodontic, periodontal, implant treatment and the like.

### BACKGROUND OF THE INVENTION

In a dental practice, time and staff are the most expensive resources and thus dental workflow efficiencies are desirable.

The following points are generally important: a) supporting the dentist and the assistant in dental workflows, b) informing the patient about the diagnoses carried out and the planned therapies, c) supporting the assistant in the maintenance of the instruments and implementing hygiene measures for the instruments. and d) illuminating the operating area for the dentist in accordance with the standards.

Dentists and assistants learn how to implement the above points in their respective training before they start working as professionals. Generally, user manuals or pc displays are usually used in the dental practices for the above mentioned points in a) to c). However, user manuals and pc displays provide only limited support.

US2022160461A1 discloses an operating light for dental care.

KR101015318B1 discloses an anti-noise device for reducing the dental equipment's noise.

### DISCLOSURE OF THE INVENTION

Currently, the inventors are not aware of any prior art dental treatment unit in which the dental treatment unit has an audiovisual facility for selectively projecting images on various differently located projection areas and for interactively assisting instrument operation and dental workflows and patient communication.

The objective of the invention is to provide a dental treatment unit having an audiovisual facility for selectively projecting images on various differently locatable projection areas and for interactively assisting instrument operation, dental workflows, and patient communication. This objective is achieved by the dental treatment unit according to claim 1. The subject-matters of the dependent claim relates to preferred embodiments and to further developments.

A major advantageous effect of the present invention is that by means of the audiovisual facility instrument operation, dental workflows, and patient communication can be performed in an interactive manner.

### BRIEF DESCRIPTION OF THE DRAWINGS

In the following description, the present invention will be explained in more detail by means of exemplary embodiments and with reference to the drawings, wherein
Fig. I - shows a dental treatment unit according to a first embodiment of the present invention;
Fig. 2 - shows a dental treatment unit according to a second embodiment of the present invention;
Fig. 3 - shows a dental treatment unit according to a third embodiment of the present invention;
Fig. 4 - shows an enlarged view of the projector, camera, microphone, and loudspeaker of the dental treatment unit according to one embodiment of the present invention;
Fig. 5 - shows an enlarged view of the computer of the dental treatment unit according to one embodiment of the present invention.

The reference numbers shown in the drawings designate the elements listed below, which are referred to in the following description of the exemplary embodiments.
- 1.: Dental treatment unit
- 2.: Chair
- 3.: Chair base
- 4.: Water tower
- 5.: Instrument
- 6.: Dentist's element
- 7.: Assistant element
- 8.: Projector
- 9.: Camera
- 10.: Microphone
- 11.: Loudspeaker
- 12.: Computer
- 13.: Projection Area
- 14.: First Position
- 15.: Second position
- 16.: Third position
- 17.: Fourth position
- 18.: Fifth position
- 19.: Sixth position
- 20: Seventh position
- 21,21': Footswitch
- 22.: Operating light
- 23, 23', 23", 23‴,23‴ʺ: Support arm
- 24.: Support guide
- 25.: Ceiling
- 26.: Floor
- 27.: Audiovisual device
- 28.: Claw

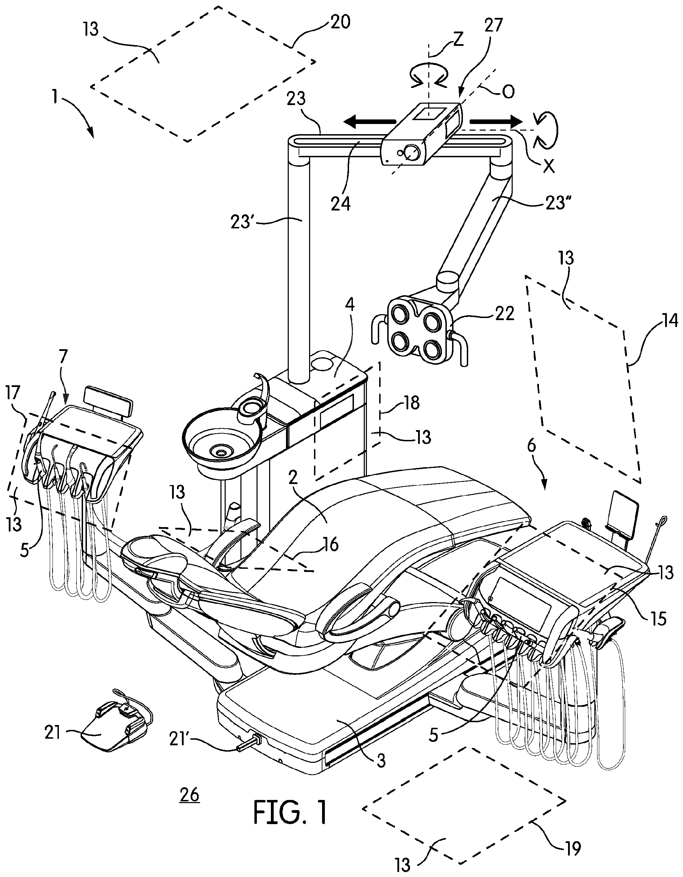

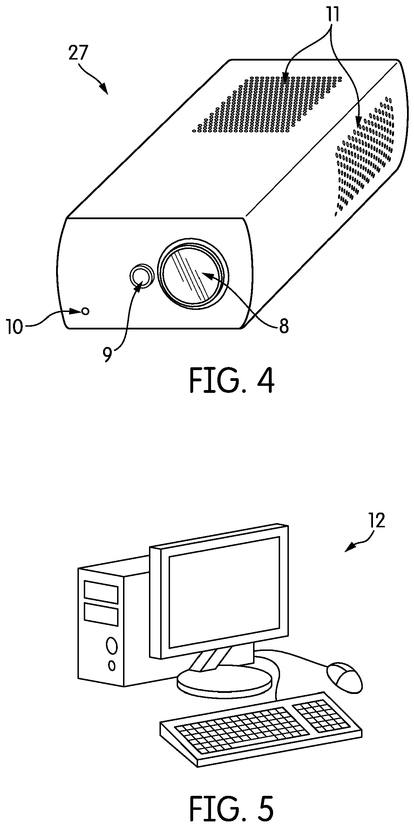

Fig. 1 shows a dental treatment unit (1) according to a first embodiment of the present invention. The dental treatment unit (1) comprises: a chair (2) for seating a patient, wherein the chair (2) is preferably adjustable by one or more motors; a chair base (3) holding the chair (2); a water tower (4) for cleaning/sanitizing instruments (5), wherein the water tower (4) is preferably configurable for left or right handed use; a dentist's element (6) for energizing and depositing the dental instruments (5); an assistant's element (7) for energizing and depositing dental instruments (5); a movable projector (8) for projecting images (see Fig. 4); a movable camera (9) for acquiring image data; a microphone (10) for acquiring acoustic data; a loudspeaker (11); and a computer (12) (see Fig. 5) for controlling the projector (8), the camera (9), the microphone (10), the loudspeaker (11), and for processing the acquired image data and acquired acoustic data. Alternatively, the computer (12) can be integrated into the dental treatment unit (1). The projector (8) is configured to project images onto a projection area (13). The camera (9) is configured to acquire image data from at least the projection area (13). The dental treatment unit (1) has preferably one or more footswitches (21,21'). The footswitches (21) may be user configurable for operating various functions of dental treatment unit (1).

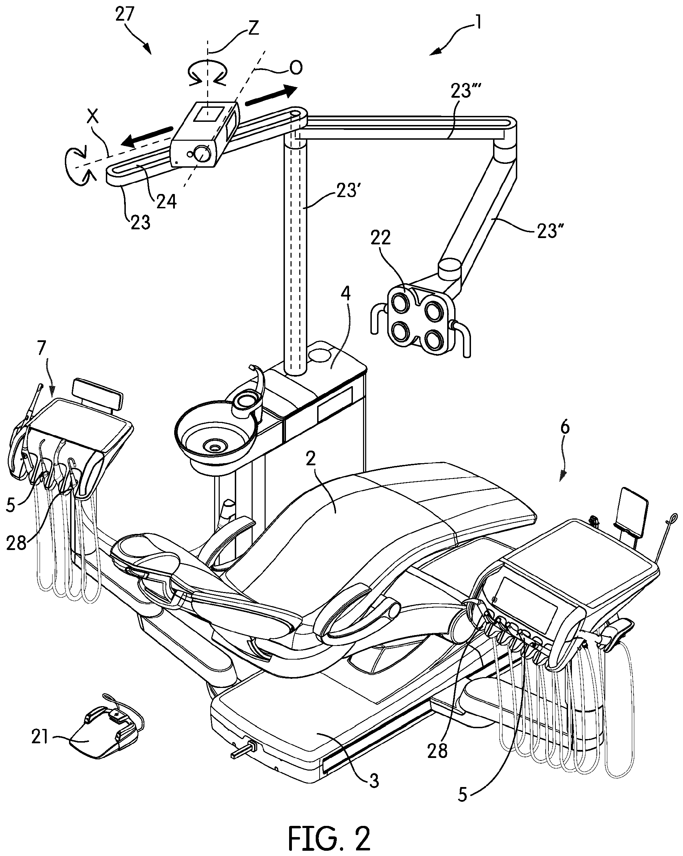

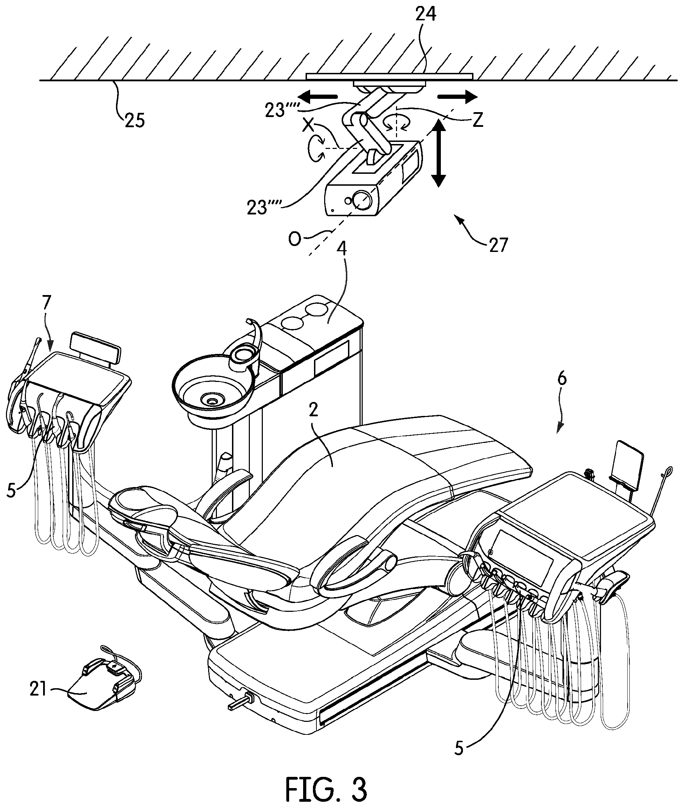

As shown in Fig. 4 an audiovisual device (27) is preferably provided as a single device including at least one projector (8), the camera (9), the microphone (10), and the loudspeaker (11). The microphone (10) and the loudspeaker (11) may be alternatively provided on other parts of the dental treatment unit (1). As shown in Fig. 1 and Fig. 2 the audiovisual device (27) can be integrally provided with the dental treatment unit (1). As shown in Fig. 3 the audiovisual device (27) can be provided separately from the dental treatment unit (1), so as to be mounted onto the ceiling of the dental practice. The audiovisual device (27) is configured as a movable device. Alternately it can be stationary.

For the most ergonomic use of the dental treatment unit (1), one or more projectors (8) can be used. The movement of the audiovisual device (27) can be performed manually in up to 3 translational axes and in up to 3 rotational axes. Alternatively, the movement of the audiovisual device (27) can be performed through a motorized mechanical device in up to 3 translational axes and in up to 3 rotational axes. This will be explained later in more detail. The communication between the audiovisual device (27) and the computer (12) is achieved through a wireless communication. Alternatively, a cable connection for such communication can be used.

### Projection Areas

The projection areas (13) are shown in Fig. 1. The projection areas (13) are located in at least one of the following positions (14-20): A first position (14) is located closer to the feet portion of the chair (2) than the head portion of the chair (2) and is substantially in a vertical plane such as a canvas or the wall of the dental practice. A second position (15) is located closer to the dentist's element (6) than the assistant element (7), the chair (2) and the water tower (4), and can include the user interface and the instruments (5). A third position (16) is located closer to the head portion of the chair (2) than the feet portion of the chair (2). A fourth position (17) is located closer to the assistant element (7) than the chair (2), the dentist's element (6), and the water tower (4), and can include the instruments. A fifth position (18) is located closer to the water tower (4) than the chair (2), the dentist's element (6), and the assistant element (7). The fifth position (18) may include the spittoon basin and/or the sanitation adapters. A sixth position (19) is located at least partially in a floor (26) plane of the chair base (3). The sixth position (19) may include the footswitch (21,21'). A seventh position (20) is located at least partially in a plane above the head portion of the chair (2) and substantially parallel to the chair base (3), wherein such plane could be a canvas or the ceiling (25) of the dental practice. The same projection areas (13) apply also to the embodiments in Fig. 2 and Fig. 3.

Any information to be displayed intended for the dentist/assistant, the patient, the patient's parents, etc. can be projected on the projection area (13) located at one of the available position s(14-20).

Example: Patient lies in supine position and the dentist wants to briefly communicate intermediate status (e.g., of a 3D scan). In this case, the dental treatment unit (1) can display the relevant scan information in a projection area (13) located at the seventh position (20) so that the projected image can be comfortably viewed by the patient without shifting (e.g., by adjusting the treatment chair).

In an embodiment as shown in Fig. 1, the projector (8) and the camera (9) are provided on a horizontal support arm (23). The projector (8) and the camera (9) are preferably arranged on a support guide (24) fixed on the horizontal support arm (23). The support guide (24) serves for linear movement of the projector (8) and the camera (9). One end of the horizontal support arm (23) is rotatably connected to a vertical support arm (23'). And the other end of the horizontal support arm (23) is connected to a further horizontal support arm (23") holding an operating light (22). The audiovisual device (27) can be rotated about a horizontal axis (x) and a vertical axis (z). The audiovisual device (27) can be preferably also rotated about the optical axis (O) through the motorized mechanical device (not shown). Also digital masks can be used.

In an alternative embodiment as shown in Fig. 2, the projector (8) and the camera (9) are provided on a horizontal support arm (23). The projector (8) and the camera (9) are preferably arranged on a support guide (24) fixed on the horizontal support arm (23).The support guide (24) serves for linear movement of the projector (8) and the camera (9). One end of the horizontal support arm (23) is rotatably connected to the vertical support arm (23'). The other end is free. A further horizontal support arm (23") holding the operating light (22) is connected to the vertical support arm (23') via another horizontal support arm (23‴). The audiovisual device (27) can be rotated about the horizontal axis (x) and the vertical axis (z). The audiovisual device (27) can be preferably also rotated about the optical axis (O) through the motorized mechanical device (not shown). Also digital mask can be used.

In an alternative embodiment as shown in Fig. 3, the projector (8) and the camera (9) are provided on a support guide (24) mountable to the ceiling (25). The support guide (24) serves for linear movement of the projector (8) and the camera (9). The audiovisual device (27) can be selectively rotated about the horizontal axis (x) and the vertical axis (z). The audiovisual device (27) can be preferably height-adjusted by means of one or more linked support arms (23ʺʺ). The audiovisual device (27) can be preferably also rotated about the optical axis (O) through the motorized mechanical device (not shown). Also, digital masks can be used for adjustment.

Herein, in the described embodiments any of the support arms (23) may be also configured as series of hinged support arms.

The audiovisual device (27), in particular the projector (8) and the camera (9) are arranged outside the housing of the operating light (22). However, it can be also integrated into the same.

The computer (12) controls several audiovisual functions of the dental treatment unit (1) through software which is provided in terms of computer readable codes stored in a memory (not shown). The computer (12) can also be in the cloud, in the dental practice, or inside the dental treatment unit. One or more computers (12) can be used. The software has preferably a downstream AI function which can audio-visually recognize the dentist, the assistant, the patient, instruments (5), other devices (e.g., 3D scanner or other special diagnostic or treatment devices) and various consumable materials.

The computer (12) performs the selection of the projection area (13) in accordance with the relevance of the content of the projected image with respect to the chair (2), the chair base (3), the water tower (4), the dentist's element (6), the assistant's element (7), and the detected users including the patient, the assistant, and the dentist, and an optimal viewing angle for the detected users, and controls the motorized movement of the projector (8) and the camera (9) in accordance with the selected projection area (13). Alternately the selection and the movement can be performed manually by a user of the dental treatment unit (1). The dentist's element (6), the assistant's element (7), the spittoon basin, the operating light (22) are preferably manually moveable. Furthermore, one or more of these can be optionally moved through motorized mechanical devices through the computer (12).

In another embodiment, the computer (12) is configured to cause one or more projectors (8) to project image data to interactively provide users like the assistant and the dentist with information on how to operate an instrument (5) or to interactively assist them with dental workflows or to interactively conduct patient communication.

In another embodiment, the computer (12) is configured to cause the loudspeaker (11) to produce acoustical signals to interactively provide users like the assistant and the dentist with information on how to operate an instrument (5) or to interactively assist them with dental workflows or to interactively conduct patient communication.

In another embodiment, the computer (12) is configured to cause the camera (9) to acquire image data relating to the operation of instruments (5), support of workflows, and patient communication.

In another embodiment, the computer (12) is configured to cause the microphone (10) to acquire acoustical data relating to operation of instruments (5), support of workflows, and patient communication.

Herein, the above mentioned operation of the instrument (5) can also include maintenance or cleaning/sanitization processes.

The combination of the acquired image data and the acquired acoustical data are processed through the software routines, preferably with AI function, for linking the data and controlling the dental treatment unit (1).

The projector (8) projects images. However, such images may also serve as a source of structured light e.g., stripe or checkerboard patterns for 3D reconstruction of intraoral and/or extraoral structures.

The dental treatment unit (1) is not only designed to support dental workflows by projecting images including instructions but also to dynamically generate patient specific additional information during the treatment to interactively support the dental workflows. The dental treatment unit (1) can provide glare-free and automatic supplementary lighting, preferably in addition to the operating light (22) that allows the patient's mouth to be actively illuminated preferably by avoiding shadows. The glare-free and automatic supplementary lighting is provided so as not to illuminate the eyes of the patient. Herein, the software can automatically recognize the mouth and eyes of the patient, instruments (5) or consumable material and the like.

### Cloud connection:

The dental treatment unit (1) has preferably a connection to the cloud. Some or all of the calculation processes can be performed in the cloud. Also, patient specific data can be retrieved from and sent to the cloud. Procurement of consumable material can be achieved over the cloud connection. The cloud/IoT integration of the dental treatment unit (1) and other dental devices such as 3D scanners, 3D printers and the like allows the dental treatment unit (1) to be used as a control center of the dental practice.

### Patient communication/reassurance:

The projector (8) can also be used for projecting images for patient communication and patient reassurance. For patient communication, the projector (8) can be placed in one of the said positions (14-20) in which both the dentist/assistant and the patient can follow the visually supported dialogs very comfortably, e.g., in an image size that takes the viewing distance into account. Here, for comparison, before & after images, or treatment plans can be displayed step by step as an example. For patient reassurance, the projector (8) displays videos or lighting effects. Also, the loudspeaker and the microphone can be used to enhance the communication and the reassurance.

### Automatic detection and tracking of instruments, devices and/or consumables:

Structured illumination by the projector (8) and digital image analysis of the video stream acquired through the camera (9) allows three-dimensional reconstruction of all objects in the camera's (9) field of view, thus creating a digital, spatial image of the work area, e.g., the dental treatment or hygienic room. In addition, objects/devices can not only be automatically detected by image analysis of the video stream acquired through the camera (9), but their spatial position can also be tracked. Herein, software can detect objects/devices directly by training with reference images or by detecting UDI (unique device identification) or barcodes on the objects/devices. Examples for objects/devices are 3D scanners, diagnostic or treatment devices (like dental probes, lasers, tabletop devices for endodontic treatment), endodontic files, prosthetic or orthodontic materials, a tooth or the like.

Automatic detection offers the following advantages in the dental practice:
- Inventories of consumables can be automatically updated and orders can be triggered, if necessary;
- Likewise, intraoral sensors can be detected and assigned to a patient;
- Detection of an additional device (e.g., 3D scanner or other special diagnostic or treatment devices) automatically leads to adjustment of settings of other devices, i.e., detection triggers a control signal for other devices (if IoT integration is used). For example, in case of a 3D Scanner, such adjustments could be switching off or dimming the operating light (22), and swiveling the projector (8) into positions (14-20) for the above interactive uses.

### Synchronization of speech recognition and spatial tracking of objects:

The spatial position of an object (e.g., a dental probe, a tooth) determined through the camera (9) can also be synchronized with speech recognition via the microphone (10).

Any information obtained through speech recognition of the dentist/assistant can be linked to the instrument position, and converted, if necessary, into text via a speech-to-text application and stored in the patient record.

Or pre-known contextual information in the patient record can be output verbally via the loudspeaker (11) or visually through the projector (8). This means, for example, that the measured value of a tooth pocket depth mentioned verbally by the dentist can be linked through the software to the position of the dental probe in the mouth, and thus the tooth on which the measurement has been taken.

Example 1: The probe tip is on tooth 26, dentist says: "DOCUMENT: Filling occlusally insufficient." The dental treatment unit (1) saves: "Filling occlusally insufficient" as information on tooth status 26, confirms the storage visually via the projector (8) and/or acoustically via the loudspeaker (11), and optionally outputs (visually/acoustically) further suitable context information, e.g., date of filling placement, material used, medical history (e.g., gnashers), number of known revisions, and the like.

Example 2: The Probe tip is on tooth 21: dentist says: "STATUS! ", loudspeaker (11) says: "Veneer, insertion on <date>."

### Biometric data and usage data:

Similarly, biometric data and usage data can be obtained via the audiovisual device (27), in particular through the camera (9) and microphone (10), which in turn can control the dental treatment unit (1). Here are some examples:
- Approximate patient size is detected via the camera (9) which triggers automatic chair adjustment, e.g., head support, for comfortable and ergonomic positioning,
- Recognition of dentists/assistants which triggers individual settings (e.g., instrument settings, user interface settings, footswitch settings, and the like) of the dental treatment unit (1),
- Recognition of patients which triggers the medical record to be retrieved, previous illnesses are displayed and individual chair settings (e.g. position of headrest and/or backrest) are performed on the dental treatment unit (1),
- Extraction of usage data by the software from data acquired by the audiovisual device (27) to improve treatments and/or workflows. An example for usage data can be chair (2) positions during different treatments or workflows linked to the treatment steps performed.

This allows (AI-supported) suggestions for better ergonomics, next treatment step or more efficient treatment/workflow. Another example for usage data can be the duration of a treatment which could be dentist specific. This allows improved treatment planning and scheduling to reduce waiting times for patients,
- Collecting acoustic data of working instruments (5) to determine through the software whether maintenance is needed or not.

### Speech, gesture and facial expression recognition and measurement of vital functions:

Furthermore, speech, gestures, facial expressions, and other body signals of the patient, e.g., the pulse rate detected by minimal change in facial color, the respiratory rate, pain signals, can be detected. This allows the following new applications in addition to the voice and/or gesture control of the dental treatment unit (1) and/or other devices:
- Anxiety patients are recognized; such info and, if necessary, vital functions are displayed by projection to the dentist,
- Performance of instruments is adjusted e.g., a scaler is adapted, i.e. the power is reduced or increased, depending on pain signals detected or not,
- Voice recognition can be performed to identify the dentist and/or the assistant. This can trigger individual settings (e.g., instrument settings, user interface settings, footswitch settings, and the like) of the dental treatment unit (1).

### Workflow support

The audiovisual device (27) can be used to support the hygiene process at the dental treatment unit (1). For this purpose, not only are checklists or flowcharts displayed (e.g., projected onto the floor), but also specific locations on the dental treatment unit (1) (e.g., instruments (5) or the sanitation adapters for the same) are visually marked by projection. The sanitation adapters (not shown) are preferably on both sides the water tower (4). The process is monitored via the camera (9) and/or any other sensors that may be present on the water tower (4). This makes it clear, for example, which instrument (5) from which claw (28) has not yet been placed in a sanitation adapter for the hygiene process. The projected information changes depending on the action performed by the assistant.

The dental treatment unit (1) can assist accounting by automatically listing performed (treatment) steps. Repetitive motion sequences can be detected, investigated and suggestions for workflow-technical optimization can be performed.

Furthermore, the dental treatment unit (1) can be used to project diagnostic information (periodontal status, caries, plaque, endodontics) based on e.g., 3D X-ray images, MRI data. Using image processing, the image captured via the camera (9) can be algorithmically modified and the modified image can be superimposed on the real scene via the projector (8). Examples of modification are: Lightening or darkening of regions, coloring or contrast spreading of relevant information, such as algorithmically detected caries or plaque.

Using a 3D scanner function 3D surface data of dental structures can be obtained by the camera (9) while using the structured illumination through the projector (8). This makes it possible, for example, to check whether an aligner still has the same shape after a desired number of weeks as initially defined. Thereby, aligner treatment can be monitored.

### Augmented reality (AR) and Virtual reality (VR) glasses:

If AR or VR glasses are used during treatment, their sensor data (e.g., camera, position sensor, acceleration sensor, motion sensors, etc.) and their position information (e.g., acquired through the audiovisual device (27)) is also synchronized with the dental treatment unit (1). This improves the location-correct overlay of AR information. Data is acquired with both the glasses and the dental treatment unit (1). It can be displayed using the glasses and/or the projector (8), and the information displayed can be different and complementary.

The audiovisual device (27) can be used in conjunction with, but is not limited to, a dental treatment unit (1). The audiovisual device (27) can also be used in a hygienic room with devices such as autoclaves, washers, disinfectors, and the like. The said positions (14-20) are in this case adapted to the devices and the users of the hygienic room.

## Claims

1. A dental treatment unit (1) comprising:
a chair (2) for seating the patient;
a chair base (3) for holding the chair (2);
a water tower (4) for cleaning/sanitizing dental instruments (5);
a dentist's element (6) for depositing the dental instruments (5);
an assistant element (7) for depositing dental instruments (5);
at least one movable projector (8) for projecting images;
at least one movable camera (9) for acquiring image data;
a computer (12) for controlling the projector (8), the camera (9), and for processing the acquired image data,
wherein the projector (8) is configured to project images onto a projection area (13), wherein the camera (9) is configured to acquire image data from the projection area (13), wherein the projection area (13) can be selectively moved in at least one of a plurality of different positions (14-20) which are defined relative to the location and the geometry of the chair (2), the chair base (3), the water tower (4), the dentist's element (6), and the assistant's element (7),
**characterized by** further comprising:
a microphone (10) for acquiring acoustic data; and
a loudspeaker (11);
wherein the computer (12) is further for controlling the microphone (10) and the loudspeaker (11), and for processing the acquired acoustic data, and wherein the computer (12) is configured to cause
a) one or more projectors (8) to project image data to interactively provide for users like the assistant and the dentist, with information on how to operate an instrument (5) or to assist with dental workflows or for patient communication;
b) the loudspeaker (11) to produce acoustical signals to interactively provide for users like the assistant and the dentist, with information on how to operate an instrument (5) or to assist with workflows for patient communication;
c) the camera (9) to acquire image data relating to operation of the instruments (5), support of dental workflows, and patient communication; and
d) the microphone (10) to acquire acoustical data relating to operation of instruments (5), support of dental workflows, and patient communication.

2. The dental treatment unit (1) according to claim 1, **characterized in that** the different positions (14-20) comprise one or more of the following:
a first position (14) which is closer to the feet portion of the chair (2) than the head portion of the chair (2) and is substantially a vertical plane;
a second position (15) which is located closer to the dentist's element (6) than the assistant's element (7), the chair (2) and the water tower (4);
a third position (16) which is located closer to the head portion of the chair (2) than the feet portion of the chair (2);
a fourth position (17) which is located closer to the assistant's element (7) than the chair (2), the dentist's element (6), and the water tower (4);
a fifth position (18) which is located closer to the water tower (4) than the chair (2), the dentist's element (6), and the assistant's element (7);
a sixth position (19) which is located at least partially in a floor plane of the chair base (3);
a seventh position (20) which is located at least partially in a plane above the head portion of the chair (2) and substantially parallel to the chair base (3).

3. The dental treatment unit (1) according to claim 1 or 2, **characterized in that** the computer performs the selection of the projection area (13) in accordance with the relevance of the content of the projected image with respect to the chair (2), the chair base (3), the water tower (4), the dentist's element (6), the assistant's element (7), and the detected user's including the patient, the assistant, and the dentist, and an optimal viewing angle for the detected users, and controls the motorized movement of the projector (8) and the camera (9) in accordance with the selected projection area (13).

4. The dental treatment unit (1) according to claim 1 or 2, **characterized in that** the selection of the projection area (13) can be performed manually in accordance with the relevance of the content of the projected image with respect to the chair (2), the chair base (3), the water tower (4), the dentist's element (6), the assistant's element (7), and the detected users including the patient, the assistant, and the dentist, and an optimal viewing angle for the detected users, and the projector (8) and the camera (9) can be manually moved in accordance with the selected projection area (13).

5. The dental treatment unit (1) according to any one of claims 1 to 4, **characterized in that** at least the projector (8) and the camera (9) are provided integrally with the dental treatment unit (1), and are arranged on a movable support arm (23).

6. The dental treatment unit (1) according to any one of claims 1 to 4, **characterized in that** at least the projector (8) and the camera (9) are provided separately from the dental treatment unit (1) and are adapted for mounting on a ceiling, a wall, or the floor of a dental practice.

## Patentansprüche

1. Zahnbehandlungseinheit (1), umfassend:
einen Stuhl (2) zum Hinsetzen des Patienten;
eine Stuhlbasis (3) zum Halten des Stuhls (2);
einen Wasserturm (4) zum Reinigen/Desinfizieren von Zahninstrumenten (5);
ein zahnärztliches Element (6) zum Ablegen der Zahninstrumente (5);
ein Unterstützerelement (7) zum Ablegen von Zahninstrumenten (5);
zumindest einen bewegbaren Projektor (8) zum Projizieren von Bildern;
zumindest eine bewegbare Kamera (9) zum Erfassen von Bilddaten;
einen Computer (12) zum Steuern des Projektors (8), der Kamera (9) und zum Verarbeiten der erfassten Bilddaten,
wobei der Projektor (8) dazu konfiguriert ist, Bilder auf einen Projektionsbereich (13) zu projizieren, wobei die Kamera (9) dazu konfiguriert ist, Bilddaten von dem Projektionsbereich (13) zu erfassen, wobei der Projektionsbereich (13) selektiv in zumindest einer aus einer Vielzahl von verschiedenen Positionen (14-20) bewegt werden kann, die relativ zu der Stelle und der Geometrie des Stuhls (2), der Stuhlbasis (3), des Wasserturms (4), des zahnärztlichen Elements (6) und des Unterstützerelements (7) definiert sind,
**dadurch gekennzeichnet, dass** sie ferner Folgendes umfasst:
ein Mikrofon (10) zum Erfassen von akustischen Daten; und
einen Lautsprecher (11);
wobei der Computer (12) ferner zum Steuern des Mikrofons (10) und des Lautsprechers (11) und zum Verarbeiten der erfassten akustischen Daten ist und wobei der Computer (12) dazu konfiguriert ist, Folgendes zu bewirken:
a) dass ein oder mehrere Projektoren (8) Bilddaten projizieren, um Benutzern wie dem Unterstützer und dem Zahnarzt interaktiv Informationen dazu bereitzustellen, wie ein Instrument (5) zu betreiben ist, oder um Zahnarbeitsflüsse oder Patientenkommunikation zu unterstützen;
b) dass der Lautsprecher (11) akustische Signale produziert, um Benutzern wie dem Unterstützer und dem Zahnarzt interaktiv Informationen dazu bereitzustellen, wie ein Instrument (5) zu betreiben ist, oder um Arbeitsflüsse für Patientenkommunikation zu unterstützen;
c) dass die Kamera (9) Bilddaten erfasst, die sich auf Betrieb der Instrumente (5), Stütze von Zahnarbeitsflüssen und Patientenkommunikation beziehen; und
d) dass das Mikrofon (10) akustische Daten erfasst, die sich auf Betrieb von Instrumenten (5), Stütze von Zahnarbeitsflüssen und Patientenkommunikation beziehen.

2. Zahnbehandlungseinheit (1) nach Anspruch 1, **dadurch gekennzeichnet, dass** die verschiedenen Positionen (14-20) eines oder mehrere des Folgenden umfassen:
eine erste Position (14), die näher an dem Fußabschnitt des Stuhls (2) als dem Kopfabschnitt des Stuhls (2) ist und im Wesentlichen eine vertikale Ebene ist;
eine zweite Position (15), die sich näher an dem zahnärztlichen Element (6) als dem Unterstützerelement (7), dem Stuhl (2) und dem Wasserturm (4) befindet;
eine dritte Position (16), die sich näher an dem Kopfabschnitt des Stuhls (2) als dem Fußabschnitt des Stuhls (2) befindet;
eine vierte Position (17), die sich näher an dem Unterstützerelement (7) als dem Stuhl (2), dem zahnärztlichen Element (6) und dem Wasserturm (4) befindet;
eine fünfte Position (18), die sich näher an dem Wasserturm (4) als dem Stuhl (2), dem zahnärztlichen Element (6) und dem Unterstützerelement (7) befindet;
eine sechste Position (19), die sich zumindest teilweise in einer Bodenebene der Stuhlbasis (3) befindet;
eine siebte Position (20), die sich zumindest teilweise in einer Ebene über dem Kopfabschnitt des Stuhls (2) und im Wesentlichen parallel zu der Stuhlbasis (3) befindet.

3. Zahnbehandlungseinheit (1) nach Anspruch 1 oder 2, **dadurch gekennzeichnet, dass** der Computer die Auswahl des Projektionsbereichs (13) gemäß der Relevanz des Inhalts des projizierten Bildes in Bezug auf den Stuhl (2), die Stuhlbasis (3), den Wasserturm (4), das zahnärztliche Element (6), das Unterstützerelement (7) und die detektierten Benutzer, beinhaltend den Patienten, den Unterstützer und den Zahnarzt, und einem optimalen Betrachtungswinkel für die detektierten Benutzer durchführt und die motorische Bewegung des Projektors (8) und der Kamera (9) gemäß dem ausgewählten Projektionsbereich (13) steuert.

4. Zahnbehandlungseinheit (1) nach Anspruch 1 oder 2, **dadurch gekennzeichnet, dass** die Auswahl des Projektionsbereichs (13) manuell gemäß der Relevanz des Inhalts des projizierten Bildes in Bezug auf den Stuhl (2), die Stuhlbasis (3), den Wasserturm (4), das zahnärztliche Element (6), das Unterstützerelement (7) und die detektierten Benutzer, beinhaltend den Patienten, den Unterstützer und den Zahnarzt, und einem optimalen Betrachtungswinkel für die detektierten Benutzer durchgeführt werden kann und der Projektor (8) und die Kamera (9) manuell gemäß dem ausgewählten Projektionsbereich (13) bewegt werden können.

5. Zahnbehandlungseinheit (1) nach einem der Ansprüche 1 bis 4, **dadurch gekennzeichnet, dass** zumindest der Projektor (8) und die Kamera (9) einstückig mit der Zahnbehandlungseinheit (1) bereitgestellt sind und an einem bewegbaren Stützarm (23) angeordnet sind.

6. Zahnbehandlungseinheit (1) nach einem der Ansprüche 1 bis 4, **dadurch gekennzeichnet, dass** zumindest der Projektor (8) und die Kamera (9) separat von der Zahnbehandlungseinheit (1) bereitgestellt sind und zum Montieren an einer Decke, einer Wand oder dem Boden einer Zahnpraxis ausgelegt sind.

## Revendications

1. Unité de traitement dentaire (1) comprenant :
un fauteuil (2) pour asseoir le patient ;
une base de fauteuil (3) pour maintenir le fauteuil (2) ;
un réservoir d'eau (4) pour nettoyer/désinfecter les instruments dentaires (5) ;
un élément de dentiste (6) pour déposer les instruments dentaires (5) ;
un élément d'assistant (7) pour déposer des instruments dentaires (5) ;
au moins un projecteur mobile (8) pour projeter des images ;
au moins une caméra mobile (9) pour acquérir des données d'image ;
un ordinateur (12) pour commander le projecteur (8), la caméra (9) et pour traiter les données d'image acquises,
ledit projecteur (8) étant conçu pour projeter des images sur une zone de projection (13), ladite caméra (9) étant configurée pour acquérir des données d'image à partir de la zone de projection (13), ladite zone de projection (13) pouvant être déplacée de manière sélective dans au moins l'une d'une pluralité de positions différentes (14 à 20) qui sont définies par rapport à l'emplacement et à la géométrie du fauteuil (2), de la base du fauteuil (3), du réservoir d'eau (4), de l'élément de dentiste (6) et de l'élément d'assistant (7),
**caractérisée en ce qu'**elle comprend en outre :
un microphone (10) pour acquérir des données acoustiques ; et
un haut-parleur (11) ;
ledit ordinateur (12) servant en outre à commander le microphone (10) et le haut-parleur (11) et à traiter les données acoustiques acquises, et ledit ordinateur (12) étant configuré pour amener
a) un ou plusieurs projecteurs (8) à projeter des données d'image afin de fournir de manière interactive aux utilisateurs comme l'assistant et le dentiste, des informations sur la façon d'utiliser un instrument (5) ou d'assister les flux de travaux dentaires ou la communication avec les patients ;
b) le haut-parleur (11) à produire des signaux acoustiques afin de fournir de manière interactive aux utilisateurs comme l'assistant et le dentiste, des informations sur la façon d'utiliser un instrument (5) ou d'assister les flux de travail pour la communication avec les patients ;
c) la caméra (9) à acquérir des données d'image relatives au fonctionnement des instruments (5), à la prise en charge des flux de travail dentaires et à la communication avec les patients ; et
d) le microphone (10) à acquérir des données acoustiques relatives au fonctionnement des instruments (5), à la prise en charge des flux de travaux dentaires et à la communication avec les patients.

2. Unité de traitement dentaire (1) selon la revendication 1, **caractérisée en ce que** les positions différentes (14 à 20) comprennent une ou plusieurs des positions suivantes :
une première position (14) qui est plus proche de la partie pied du fauteuil (2) que la partie tête du fauteuil (2) et est sensiblement un plan vertical ;
une deuxième position (15) qui est située plus près de l'élément de dentiste (6) que l'élément d'assistant (7), le fauteuil (2) et le réservoir d'eau (4) ;
une troisième position (16) qui est située plus près de la partie tête du fauteuil (2) que de la partie pied du fauteuil (2) ;
une quatrième position (17) qui est située plus près de l'élément d'assistant (7) que le fauteuil (2), l'élément de dentiste (6) et le réservoir d'eau (4) ;
une cinquième position (18) qui est située plus près du réservoir d'eau (4) que le fauteuil (2), l'élément de dentiste (6) et l'élément d'assistant (7) ;
une sixième position (19) qui est située au moins partiellement dans un plan de plancher de la base de fauteuil (3) ;
une septième position (20) qui est située au moins partiellement dans un plan au-dessus de la partie tête du fauteuil (2) et sensiblement parallèle à la base du fauteuil (3).

3. Unité de traitement dentaire (1) selon la revendication 1 ou 2, **caractérisée en ce que** l'ordinateur effectue la sélection de la zone de projection (13) conformément à la pertinence du contenu de l'image projetée par rapport au fauteuil (2), à la base du fauteuil (3), au réservoir d'eau (4), à l'élément de dentiste (6), à l'élément d'assistant (7) et à l'utilisateur détecté, notamment le patient, l'assistant et le dentiste, et suivant un angle de vision optimal pour les utilisateurs détectés, et commande le mouvement motorisé du projecteur (8) et de la caméra (9) conformément à la zone de projection sélectionnée (13).

4. Unité de traitement dentaire (1) selon la revendication 1 ou 2, **caractérisée en ce que** la sélection de la zone de projection (13) peut être effectuée manuellement en fonction de la pertinence du contenu de l'image projetée par rapport au fauteuil (2), à la base du fauteuil (3), au réservoir d'eau (4), à l'élément de dentiste (6), à l'élément d'assistant (7) et aux utilisateurs détectés, notamment le patient, l'assistant et le dentiste, et un angle de vision optimal pour les utilisateurs détectés, et le projecteur (8) et la caméra (9) peuvent être déplacés manuellement en fonction de la zone de projection sélectionnée (13).

5. Unité de traitement dentaire (1) selon l'une quelconque des revendications 1 à 4, **caractérisée en ce qu'**au moins le projecteur (8) et la caméra (9) sont fournis d'un seul tenant avec l'unité de traitement dentaire (1), et sont disposés sur un bras de support mobile (23).

6. Unité de traitement dentaire (1) selon l'une quelconque des revendications 1 à 4, **caractérisée en ce qu'**au moins le projecteur (8) et la caméra (9) sont fournis séparément de l'unité de traitement dentaire (1) et sont adaptés pour être montés sur un plafond, un mur ou le sol d'un cabinet dentaire.
